# EUROPÄISCHE PATENTSCHRIFT

(11) **EP 0 753 479 B1**
(45) Veröffentlichungstag und Bekanntmachung des Hinweises auf die Patenterteilung: **30.07.2003**
(21) Anmeldenummer: 96109459.6
(22) Anmeldetag: 13.06.1996
(51) Int. Cl.: B66F 11/04

(54) **Fahrzeug, insbesondere Kampffahrzeug mit einer Hubplattform**
Vehicle, particularly combat vehicle with a lifting platform
Véhicule, notamment véhicule de combat avec une plateforme élévatrice

(30) Priorität: 14.07.1995 DE 19525695
(43) Veröffentlichungstag der Anmeldung: 15.01.1997
(73) Patentinhaber: Krauss-Maffei Wegmann GmbH & Co. KG, 80997 München (DE)
(72) Erfinder: Dieling, Frank, 34292 Ahnatal (DE)
(74) Vertreter: Feder, Wolf-Dietrich, Dr. Dipl.-Phys.

(56) Entgegenhaltungen:
- EP-A- 0 063 709
- EP-A- 0 155 830
- EP-A- 0 619 266
- DE-A- 4 030 167
- PATENT ABSTRACTS OF JAPAN vol. 096, no. 005, 31.Mai 1996 & JP 08 012296 A (KYUSHU ELECTRIC POWER CO INC;OTHERS: 01), 16.Januar 1996,

## Beschreibung

Die Erfindung betrifft ein Fahrzeug, insbesondere ein Kampffahrzeug mit einer Hubplattform die über eine Hubeinrichtung mit der Fahrzeugoberseite verbunden ist, wobei die Hubeinrichtung zwei ausfahrbare scherenartig aber ohne Koppelung miteinander angeordnete Teleskoparme aufweist, deren unteres Ende jeweils gelenkig mit der Fahrzeugoberseite und deren oberes Ende jeweils gelenkig mit der Hubplattform verbunden ist, und jeder Teleskoparm eine Antriebsvorrichtung für die Ausfahrbewegung besitzt und an einem der Teleskoparme eine den Teleskoparm aus einer im wesentlichen horizontalen Ruhestellung hochschwenkende Hubvorrichtung angeordnet ist und mit einer Steuereinrichtung zur Steuerung der Antriebsvorrichtungen und der Hubvorrichtung.

In der DE 40 30 167C2 ist eine fahrbare Hubbühne beschrieben, die prinzipiell die oben angegebenen Merkmale besitzt. Es handelt sich hier um eine Arbeitsbühne, bei der davon ausgegangen werden kann, daß im Gebrauch das Fahrzeuguntergestell einigermaßen waagerecht ausgerichtet ist. Es ist bei dieser bekannten Einrichtung nicht möglich, eine eventuelle Schrägstellung des Fahrgestells bei der Aufwärtsbewegung der Plattform auszugleichen.

Es ist weiterhin bekannt (siehe z.B. DE 31 20 338C2), an einem Fahrzeug, insbesondere einem Kampffahrzeug, eine Hubplattform über einen Knickhebelausleger anzuordnen, wobei der Knickhebelausleger aus zwei aneinander anschließenden und gegeneinander verschwenkbaren Hebelarmen besteht. Derartige Konstruktionen sind technisch relativ aufwendig.

Der Erfindung liegt die Aufgabe zugrunde, ein Fahrzeug, insbesondere ein Kampffahrzeug mit einer Hubplattform, die gemäß den oben angegebenen und im Oberbegriff des Patentanspruchs 1 aufgeführten Merkmalen mit der Fahrzeugoberseite verbunden ist, so auszugestalten, daß mit sehr einfachen Konstruktionsmerkmalen sichergestellt ist, daß die Hubplattform so angehoben werden kann, daß eine Geländeneigung ausgeglichen wird. Weiterhin sollte es möglich sein, Hubplattform und Hubeinreichtung so auf dem Fahrzeug unterzubringen, daß sie im eingefahrenen Zustand in die Fahrzeugkontur integriert sind und ein unbehinderter Fahrbetrieb und die bei einem Militärfahrzeug besonders wichtige Rundumsicht über Winkelspiegel und über die Luke gewährleistet sind.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, die von einer fahrbaren Arbeitsbühne bekannte Hubplattform mit Hubeinrichtung an einem Fahrzeug, insbesondere einem Kampffahrzeug in der Weise einzusetzen, daß Bewegungen der beiden Teleskoparme unabhängig voneinander steuerbar sind und zwar so, daß der erste der beiden Teleskoparme bei der Aufricht- und Ausfahrbewegung führend ist, während der zweite Teleskoparm so nachgesteuert wird, daß aufgrund der von dem an der Hubplattform angeordneten Neigungssensor abgegebenen Signale die Hubplattform in einer Achse horizontiert wird. So ist es bei entsprechender Anordnung der Teleskoparme möglich, beispielsweise eine Geländeneigung in Fahrzeugquerrichtung auszugleichen. Ein Ausgleichen in Fahrzeuglängsrichtung kann dann mit einfachen Mitteln an der Hubplattform selbst durchgeführt werden.

Da im eingefahrenen Zustand die Teleskoparme im wesentlichen horizontal ausgerichtet sind, hat es sich, um das Ausfahren des zweiten Teleskoparmes aus dieser Position zu erleichtern, als vorteilhaft erwiesen, wenn dieser Teleskoparm mindestens im unteren Ausfahrbereich mit einem Drehmoment um seine Aufrichtachse beaufschlagt wird. Dieses Drehmoment kann entweder durch einen Federmechanismus, beispielsweise eine Drehstabfeder, oder auch durch einen einstufigen Zylinder oder einen elektrischen Linearantrieb aufgebracht werden.

Die Gesamtkonstruktion der Hubeinrichtung macht es möglich, sowohl die Hubplattform als auch die Teleskoparme im eingefahrenen Zustand in eine Vertiefung an der Fahrzeugoberseite aufzunehmen. Weiterhin ist es ein Vorteil der erfindungsgemäßen Einrichtung, daß die Einheit Hubplattform-Hubeinrichtung als Modul in bestehende Fahrzeuge eingebaut, bzw. an sie angebaut oder auch bei zukünftigen Fahrzeugkonzepten als Ganzes eingesetzt werden kann.

Als Antriebsvorrichtungen für die Ausfahrbewegung der Teleskoparme und auch als Hubvorrichtung können sowohl Hydraulikzylinder als auch elektrische Spindelantriebe eingesetzt werden.

Im folgenden wird anhand der beigefügten Zeichnungen ein Ausführungsbeispiel für ein Fahrzeug mit einer Hubplattform nach der Erfindung näher erläutert.

In den Zeichnungen zeigen:
Fig. 1 in einer teilweise nach der Linie I-I in Fig. 2 geschnittenen Seitenansicht ein Kampffahrzeug mit einer Hubplattform im eingefahrenen Zustand der Hubeinrichtung;
Fig. 2 das Kampffahrzeug nach Fig. 1 in einer Aufsicht;
Fig. 3 in einer perspektivischen Darstellung das Kampffahrzeug nach Fig. 1 und 2 mit ausgefahrener Hubplattform;
Fig. 4 in einer anderen Perspektive das Kampffahrzeug nach Fig. 1 und 2 mit ausgefahrener Hubplattform;
Fig. 5 in einem Prinzipschaltbild die Antriebsvorrichtungen und die Hubvorrichtung der Hubeinrichtung in einer Ausführung mit Hydraulikzylindern.

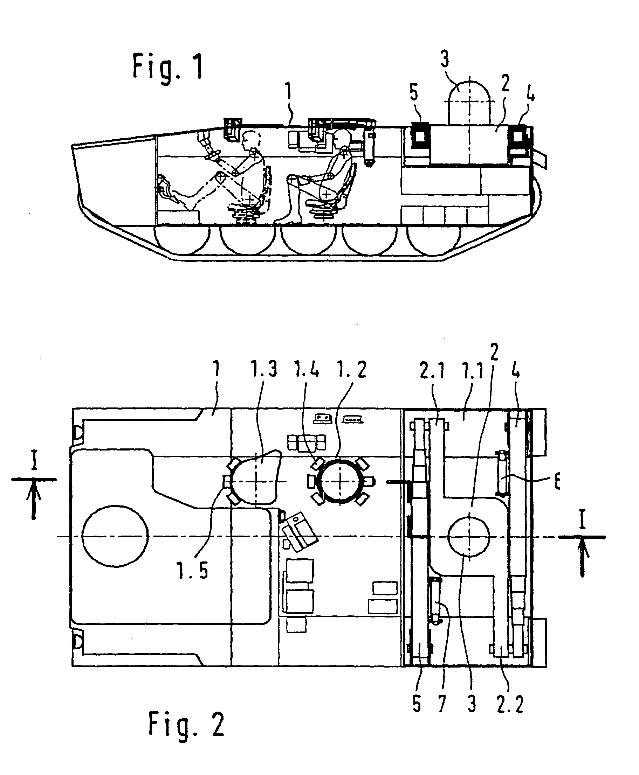

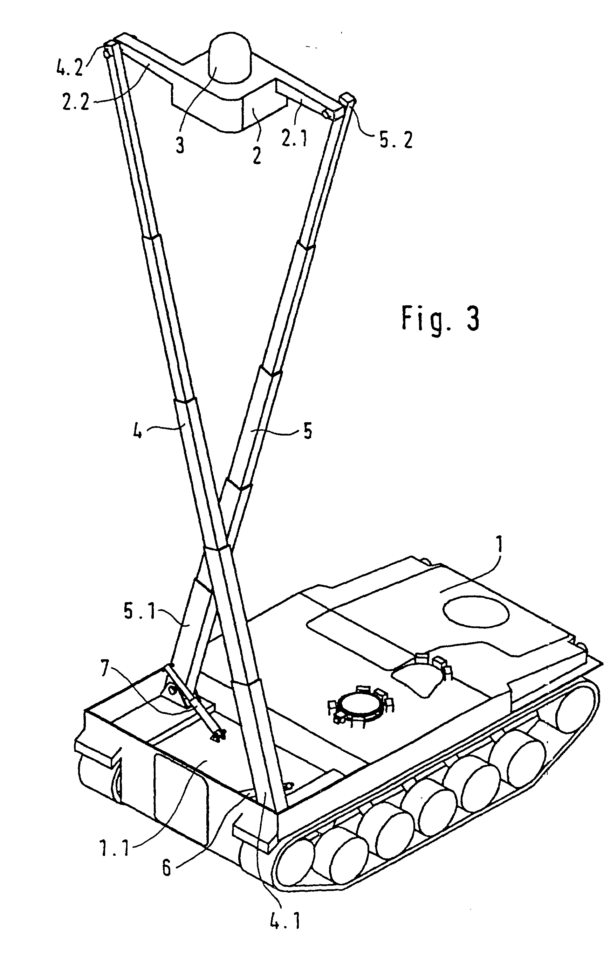

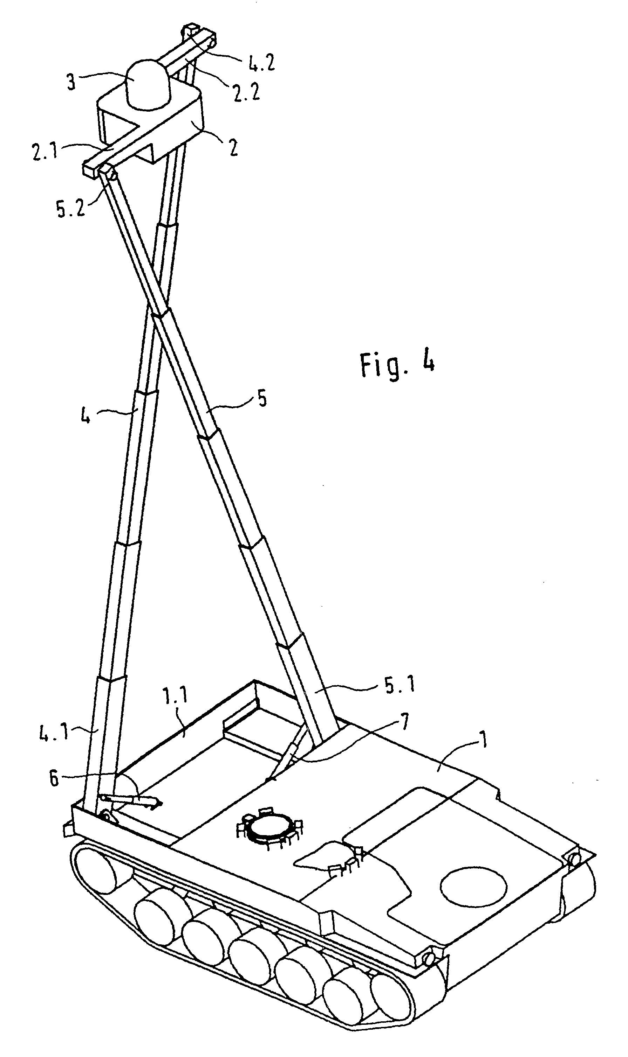

Die Fig. 1 und 2 zeigen ein Kampffahrzeug 1 mit Kettenantrieb bekannter Bauart, an dessen Oberseite eine in Querrichtung zur Fahrzeuglängsachse verlaufende wannenartige Vertiefung 1.1 angeordnet ist, die weiter unten näher erläutert wird. Weiterhin besitzt das Fahrzeug Ein/Ausstiegsluken 1.2 und 1.3, um die herum für die Rundumsicht Winkelspiegel 1.4 bzw. 1.5 angeordnet sind. Weitere, an sich bekannte Merkmale des Kampffahrzeugs als solches, die teilweise den Zeichnungen zu entnehmen sind, werden im folgenden nicht näher erläutert.

Das in den Zeichnungen dargestellte Kampffahrzeug ist mit einer Hubplattform 2 ausgerüstet, auf der beispielsweise ein angedeutetes Sichtgerät 3 angeordnet sein kann. Die Hubplattform 2 kann aus einer Ruhestellung, in der sie innerhalb der wannenartigen Vertiefung 1.1 am Heck des Kampffahrzeugs angeordnet ist, nach oben ausgefahren werden in eine Stellung, wie sie beispielsweise in den Fig. 3 und 4 dargestellt ist. Zu diesem Zweck ist zwischen dem Kampffahrzeug und der Hubplattform eine Hubeinrichtung vorgesehen, die zwei ausfahrbare, scherenartig angeordnete Teleskoparme 4 und 5 aufweist, wobei die unteren Enden 4.1, 5.1 der Teleskoparme jeweils gelenkig mit der Fahrzeugoberseite und die oberen Enden 4.2, 5.2 der Teleskoparme jeweils gelenkig mit Tragarmen 2.1 und 2.2 der Hubplattform 2 verbunden sind. Im Bereich zwischen diesen Koppelungspunkten an den Enden der Teleskoparme sind diese nicht miteinander gekoppelt. In dem dargestellten Ausführungsbeispiel bestehen die Antriebsvorrichtungen für die Ausfahrbewegung der Teleskoparme 4 und 5 aus fünfstufigen Hydraulikzylindern, es können hier aber auch andere Antriebsvorrichtungen, beispielsweise elektrische Spindelteleskope eingesetzt werden. Im unteren Bereich der Teleskoparme 4 und 5 sind als einstufige Hydraulikzylinder ausgebildete Hubvorrichtungen 6 und 7 angeordnet, mittels derer die Teleskoparme 4 und 5 aus der im wesentlichen horizontalen Ruhestellung hochgeschwenkt werden können. Auch an dieser Stelle können an Stelle der Hydraulikzylinder beispielsweise elektrische Linearantriebe eingesetzt werden. Wie weiter unten näher erläutert, ist es auch ausreichend, wenn nur einer der beiden Teleskoparme mit einer Hubvorrichtung in Form eines Hydraulikzylinder oder Linearantriebes versehen ist, während am anderen Teleskoparm lediglich ein in Anheberichtung vorgespannter Federmechanismus, beispielsweise eine Drehstabfeder, angeordnet ist, die das Hochschwenken dieses Teleskoparms aus der Ruhestellung im unteren Ausfahrbereich erleichtert.

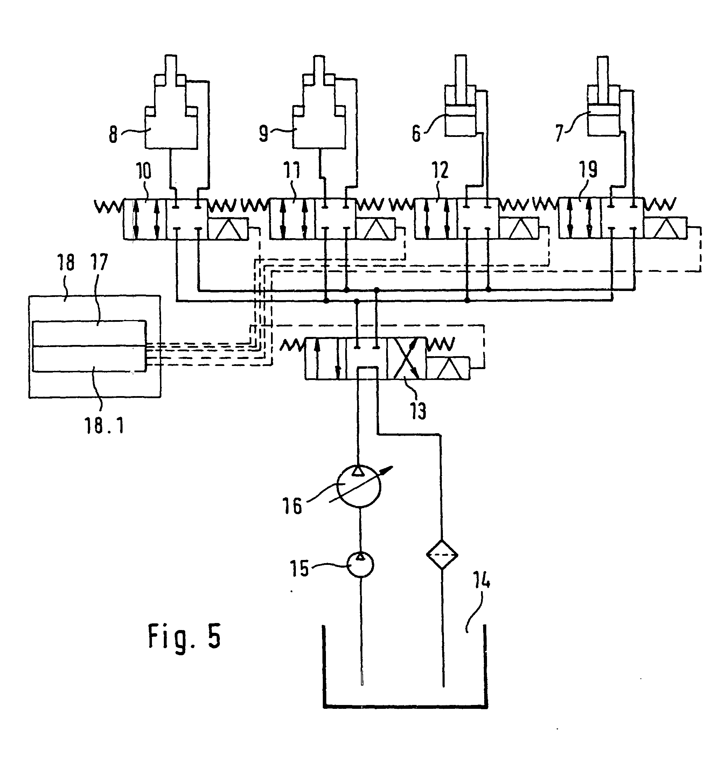

Die Antriebs- und Hubeinrichtungen sind in Fig. 5 stark schematisiert dargestellt. Es ist eine Steuereinrichtung 18 vorhanden, die einen Mikroprozessor 18.1 enthält. Weiterhin ist an der Hubplattform 2 in nicht eigens dargestellter Weise ein Neigungssensor 17 angeordnet, der mit der Steuereinrichtung 18 verbunden ist und die jeweilige Neigung der Hubplattform 2 gegen den Horizont angibt und ein entsprechendes Steuersignal der Steuereinrichtung 18 zuführt. Der Hydraulikkreis enthält einen insgesamt fünfstufigen Teleskopzylinder 8, beispielsweise für die Ausfahrbewegung des Teleskoparms 4, einen fünfstufigen Teleskopzylinder 9, beispielsweise für die Ausfahrbewegung des Teleskoparms 5, sowie einen Stützzylinder 6 zum Hochschwenken des Teleskoparms 4 und einen zweiten Stützzylinder 7 zum Hochschwenken des Teleskoparms 5.

Die Zuführung und Abführung der Hydraulikflüssigkeit aus einem Vorratsgefäß 14 erfolgt mittels einer Pumpe 15 über einen Druckmesser 16 und die von der Steuereinrichtung 18 her ansteuerbaren Ventile 10, 11, 12, 19 und 13.

Sämtliche der hydraulischen Hubvorrichtungen 8, 9 und 6, 7 sind unabhängig voneinander betätigbar, und das Ausfahren der Hubplattform 2 erfolgt gesteuert von der Steuereinrichtung 18 und dem Neigungssensor 17 in der Weise, daß beispielsweise der erste Teleskoparm 4 mittels des Teleskopzylinders 8 und des Stützzylinders 6 eine Aufrecht- und Ausfahrbewegung ausführt, während der zweite Teleskoparm 5 lediglich zur Abstützung der Hubplattform 2 nachgeführt wird und dabei durch entsprechende vom Neigungssensor 17 ausgehende Steuersignale dafür gesorgt wird, daß während der Aufricht- und Ausfahrbewegung der obere Anlenkpunkt des Teleskopzylinders 4 auf einer Linie senkrecht zum Fahrzeug ausfährt und die Hubplattform 2 immer über dem Fahrzeug bleibt. Hierbei wird weiterhin die Hubplattform 2 in einer Achse parallel zur Längsrichtung des Kampffahrzeugs horizontiert, so daß eine Geländeneigung in Fahrzeugquerrichtung ausgeglichen werden kann. Die Endstellung der Hubplattform 2 im ausgefahrenen Zustand ist in unterschiedlichen Perspektiven in den Fig. 3 und 4 dargestellt. Die Einfahrbewegung geschieht in umgekehrter Richtung, so daß im wieder eingefahrenen Zustand die Hubplattform wieder in die wannenartige Vertiefung 1.1 einfährt und Teleskoparme und Plattform in die Fahrzeugkontur integriert sind, so daß nur noch das auf der Hubplattform 2 installierte Sichtgerät 3 über die Fahrzeugkontur herausragt und auch im eingefahrenen Zustand eingesetzt werden kann. Durch diese Anordnung wird ein von den Teleskoparmen 4 und 5 sowie der Hubplattform 2 unbehinderter Fahrbetrieb erreicht und die Rundumsicht über die Winkelspiegel 1.4 nicht gestört.

## Patentansprüche

1. Fahrzeug, insbesondere Kampffahrzeug, mit einer Hubplattform (2) die über eine Hubeinrichtung mit der Fahrzeugoberseite verbunden ist, wobei die Hubeinrichtung zwei ausfahrbare, scherenartig aber ohne Koppelung miteinander angeordnete Teleskoparme (4,5) aufweist, deren unteres Ende (4.1,5.1) jeweils gelenkig mit der Fahrzeugoberseite und deren oberes Ende (4.2,5.2) jeweils gelenkig mit der Hubplattform (2) verbunden ist, und jeder Teleskoparm (4,5) eine Antriebsvorrichtung (8,9) für die Ausfahrbewegung besitzt und an einem der Teleskoparme (4,5) eine den Teleskoparm (4,5) aus einer im wesentlichen horizontalen Ruhestellung hochschwenkende Hubvorrichtung (6,7) angeordnet ist und mit einer Steuereinrichtung zur Steuerung der Antriebsvorrichtungen und der Hubvorrichtung (6,7), **dadurch gekennzeichnet, daß** die beiden Antriebsvorrichtungen (8, 9) und die Hubvorrichtung (6, 7) von der einen Mikroprozessor (18.1) enthaltenden Steuereinrichtung (18) aus unabhängig voneinander ansteuerbar sind derart, daß der erste mit der Hubvorrichtung (6) versehene Teleskoparm (4) eine Aufricht- und Ausfahrbewegung ausführt, während der zweite Teleskoparm (5) lediglich zur Abstützung der Hubplattform (2) nachgeführt wird, wobei gesteuert von einem an der Hubplattform (2) angeordneten, mit der Steuereinrichtung (18) verbundenen Neigungssensor (17) die Hubplattform (2) während der Aufricht- und Ausfahrbewegung in einer Achse im wesentlichen senkrecht zur Schwenkebene der Teleskoparme (4, 5) horizontiert wird.

2. Fahrzeug nach Anspruch 1, **dadurch gekennzeichnet, daß** die Aufricht- und Ausfahrbewegung des ersten Teleskoparms (4) so gesteuert ist, daß sich der obere Anlenkpunkt (4.2) dieses Teleskoparms auf einer Bahn im wesentlichen senkrecht zur Fahrzeugmittelebene bewegt.

3. Fahrzeug nach Anspruch 1 oder 2, **dadurch gekennzeichnet, daß** als Antriebsvorrichtungen für die Ausfahrbewegung der Teleskoparme (4, 5) mehrstufige Hydraulikzylinder (8, 9) dienen.

4. Fahrzeug nach Anspruch 1 oder 2, **dadurch gekennzeichnet, daß** als Antriebsvorrichtungen für die Ausfahrbewegung der Teleskoparme elektrische Spindelantriebe dienen.

5. Fahrzeug nach Anspruch 3 oder 4, **dadurch gekennzeichnet, daß** die Hubvorrichtung als einstufiger Hydraulikzylinder (6) ausgebildet ist.

6. Fahrzeug nach Anspruch 3 oder 4, **dadurch gekennzeichnet, daß** die Hubvorrichtung als elektrischer Linearantrieb ausgebildet ist.

7. Fahrzeug nach einem der Ansprüche 1 bis 6, **dadurch gekennzeichnet, daß** am zweiten Teleskoparm (5) eine die Anhebbewegung aus der im wesentlichen horizontalen Ruhestellung unterstützende Hilfs-Hubvorrichtung (7) angeordnet ist.

8. Fahrzeug nach Anspruch 7, **dadurch gekennzeichnet, daß** die Hilfs-Hubvorrichtung als in Anhebrichtung vorgespannte Drehstabfeder ausgebildet ist.

9. Fahrzeug nach Anspruch 7, **dadurch gekennzeichnet, daß** die Hilfs-Hubvorrichtung als zusätzlicher, von der Steuereinrichtung (18) her ansteuerbarer einstufiger Hydraulikzylinder (7) ausgebildet ist.

10. Fahrzeug nach Anspruch 7, **dadurch gekennzeichnet, daß** die Hilfs-Hubvorrichtung als elektrischer Linearantrieb ausgebildet ist.

11. Fahrzeug nach einem der Ansprüche 1 bis 10, **dadurch gekennzeichnet, daß** die Schwenkebenen der Teleskoparme (4, 5) im wesentlichen senkrecht zur Fahrzeuglängsachse stehen.

12. Fahrzeug nach Anspruch 11, **dadurch gekennzeichnet, daß** an der Fahrzeugoberseite eine wannenartige Vertiefung (1.1) angeordnet ist, in welche die Hubplattform (2) sowie die Teleskoparme (4, 5) im eingefahrenen Zustand aufgenommen werden.

## Claims

1. Vehicle, in particular a combat vehicle, having a lifting platform (2) connected by a lifting device to the top of the vehicle, wherein the lifting device comprises two extendable telescopic arms (4, 5), which are arranged in a scissors-like manner but without being coupled to one another and of which in each case the bottom end (4.1, 5.1) is hinge-connected to the top of the vehicle and the top end (4.2, 5.2) is hinge-connected to the lifting platform (2), and each telescopic arm (4, 5) has a drive apparatus (8, 9) for the extension motion and there is disposed on one of the telescopic arms (4, 5) a lifting apparatus (6, 7), which swivels the telescopic arm (4, 5) up from a substantially horizontal idle position, and having a control device for controlling the drive apparatuses and the lifting apparatus (6, 7), **characterized in that** the two drive apparatuses (8, 9) and the lifting apparatus (6, 7) are controllable independently of one another from the control device (18) comprising a microprocessor (18.1), such that the first telescopic arm (4) provided with the lifting apparatus (6) executes an erection and extension motion, while the second telescopic arm (5) executes a follow-up motion merely to support the lifting platform (2), wherein under the control of an inclination sensor (17), which is disposed on the lifting platform (2) and connected to the control device (18), the lifting platform (2) during the erection and extension motion is levelled in one axis substantially at right angles to the swivelling plane of the telescopic arms (4, 5).

2. Vehicle according to claim 1, **characterized in that** the erection and extension motion of the first telescopic arm (4) is controlled in such a way that the top articulation point (4.2) of said telescopic arm moves along a path substantially at right angles to the vehicle centre plane.

3. Vehicle according to claim 1 or 2, **characterized in that** as drive apparatuses for the extension motion of the telescopic arms (4, 5) multi-stage hydraulic cylinders (8, 9) are used.

4. Vehicle according to claim 1 or 2, **characterized in that** as drive apparatuses for the extension motion of the telescopic arms electric spindle drives are used.

5. Vehicle according to claim 3 or 4, **characterized in that** the lifting apparatus takes the form of a single-stage hydraulic cylinder (6).

6. Vehicle according to claim 3 or 4, **characterized in that** the lifting apparatus takes the form of an electric linear drive.

7. Vehicle according to one of claims 1 to 6, **characterized in that** disposed on the second telescopic arm (5) is an auxiliary lifting apparatus (7) for assisting the lifting motion from the substantially horizontal idle position.

8. Vehicle according to claim 7, **characterized in that** the auxiliary lifting apparatus takes the form of a torsion bar spring, which is biased in lifting direction.

9. Vehicle according to claim 7, **characterized in that** the auxiliary lifting apparatus takes the form of an additional single-stage hydraulic cylinder (7), which is controllable from the control device (18).

10. Vehicle according to claim 7, **characterized in that** the auxiliary lifting apparatus takes the form of an electric linear drive.

11. Vehicle according to one of claims 1 to 10, **characterized in that** the swivelling planes of the telescopic arms (4, 5) lie substantially at right angles to the vehicle longitudinal axis.

12. Vehicle according to claim 11, **characterized in that** disposed in the top of the vehicle is a trough-like recess (1.1), into which the lifting platform (2) as well the telescopic arms (4, 5) in the retracted state are received.

## Revendications

1. Véhicule, en particulier véhicule de combat avec une plate-forme élévatrice (2) qui est reliée à la face supérieure du véhicule via un dispositif élévateur, le dispositif élévateur comprenant deux bras télescopiques (4, 5) déployables agencés en parallélogramme articulé mais sans accouplement mutuel, dont l'extrémité inférieure respective (4.1, 5.1) est reliée en articulation à la face supérieure du véhicule et dont l'extrémité supérieure respective (4.2, 5.2) est reliée en articulation à la plate-forme élévatrice (2), et chaque bras télescopique (4, 5) possède un dispositif d'entraînement (8, 9) pour le mouvement de déploiement et sur l'un des bras télescopiques (4, 5) est agencé un dispositif élévateur (6, 7) faisant basculer le bras télescopique (4, 5) à partir d'une position de repos sensiblement horizontale vers le haut, et comportant un système de commande pour commander les dispositifs d'entraînement et le dispositif élévateur (6, 7), **caractérisé en ce que** les deux dispositifs d'entraînement (8, 9) et le dispositif élévateur (6, 7) sont susceptibles d'être pilotés indépendamment l'un de l'autre par le système de commande (18) comportant un microprocesseur (18.1), de telle sorte que le premier bras télescopique (4) pourvu du dispositif élévateur (6) exécute un mouvement de redressement et de déploiement, tandis que le deuxième bras télescopique (5) exécute simplement un mouvement de suivi pour soutenir la plate-forme élévatrice (2), et la plate-forme élévatrice (2) est maintenue à l'horizontale dans un axe sensiblement perpendiculaire au plan de basculement des bras télescopiques (4, 5) pendant le mouvement de redressement et déploiement, sous la commande d'un inclinomètre (17) agencé sur la plate-forme élévatrice (2) et connecté au système de commande (18).

2. Véhicule selon la revendication 1, **caractérisé en ce que** le mouvement de redressement et déploiement du premier bras télescopique (4) est commandé de telle sorte que le point d'articulation supérieur (4.2) de ce bras télescopique se déplace sur une trajectoire sensiblement perpendiculaire au plan médian du véhicule.

3. Véhicule selon l'une ou l'autre des revendications 1 et 2, **caractérisé en ce que** des vérins hydrauliques (8, 9) à plusieurs étages servent de dispositifs d'entraînement pour le mouvement de déploiement des bras télescopiques (4, 5).

4. Véhicule selon l'une ou l'autre des revendications 1 et 2, **caractérisé en ce que** des entraînements à broche électriques servent de dispositifs d'entraînement pour le mouvement de déploiement des bras télescopiques.

5. Véhicule selon l'une ou l'autre des revendications 3 et 4, **caractérisé en ce que** le dispositif élévateur est réalisé sous forme de vérin hydraulique (6) à un seul étage.

6. Véhicule selon l'une ou l'autre des revendications 3 et 4, **caractérisé en ce que** le dispositif élévateur est réalisé sous forme d'entraînement électrique linéaire.

7. Véhicule selon l'une des revendications 1 à 6, **caractérisé en ce que** sur le deuxième bras télescopique (5) est agencé un dispositif élévateur auxiliaire (7) assistant le mouvement de soulèvement à partir de la position de repos sensiblement horizontale.

8. Véhicule selon la revendication 7, **caractérisé en ce que** le dispositif élévateur auxiliaire est réalisé sous forme de ressort à barre de torsion précontraint en direction de soulèvement.

9. Véhicule selon la revendication 7, **caractérisé en ce que** le dispositif élévateur auxiliaire est réalisé sous forme de vérin hydraulique supplémentaire (7) à un seul étage susceptible d'être piloté à partir du système de commande (18).

10. Véhicule selon la revendication 7, **caractérisé en ce que** le dispositif élévateur auxiliaire est réalisé sous forme d'entraînement électrique linéaire.

11. Véhicule selon l'une des revendications 1 à 10, **caractérisé en ce que** les plans de basculement des bras télescopiques (4, 5) sont sensiblement perpendiculaires à l'axe longitudinal du véhicule.

12. Véhicule selon la revendication 11, **caractérisé en ce qu'**un renfoncement (1.1) en forme de cuve est ménagé sur la face supérieure du véhicule, qui peut recevoir la plate-forme élévatrice (2) ainsi que les bras télescopiques (4, 5) dans l'état rétracté.
